# EUROPEAN PATENT APPLICATION

(11) **EP 3 296 461 A1**
(43) Date of publication of application: **21.03.2018**
(21) Application number: 17189548.5
(22) Date of filing: 06.09.2017
(51) Int. Cl.: E01B 26/00, F16L 3/12, H02G 3/00, F16L 3/13, H02G 3/04

(54) **CABLE MANAGEMENT ASSEMBLY**

(30) Priority: 14.09.2016 GB 201615637
(71) Applicant: Multiclip Company Limited, Addlestone, Surrey KT15 2AR (GB)
(72) Inventor: MULVAY, Craig Anthony, Plymouth, Devon PL7 5BG (GB)
(74) Representative: Haseltine Lake LLP

(57) **Abstract**

A cable management assembly (2) for use with a railway rail (1), comprising: a connector (10) having a clip (12) and a fastener (11) for fastening the clip (12) to an underside of a foot (1b) of the railway rail (1), and a tube (20) comprising, along the length of the tube, a slit (20a) for insertion of a cable into the tube, wherein the clip (12) comprises an opening (12a) through which the tube (20) is insertable into the clip, and the tube (20) and clip (12) are configured to be moveable relative to each other between an open position, in which the slit (20a) and opening (12a) are aligned to allow the cable to be inserted into the tube (20), and a closed position, in which the slit (20a) and opening (12a) are out of alignment so that the cable is retained in the tube.

## Description

The field of the invention relates to a cable management assembly and in particular a cable management assembly for use with a railway rail.

A common problem in the field of railway design and, in particular, railway rail cabling is how to appropriately manage or organise cables which need to be routed underneath the running rails of a train track. Existing methods of routing cables underneath running rails include clipping the cables to railway sleepers, which support the rails. This technique can be detrimental to the life of the sleepers depending on the methods used to clip the cables to the sleepers and can also take significant time for installation, which in turns raises cost and complexity. Another method for routing cables underneath railway tracks includes laying simple plastic drainpipes underneath the rails as a guide and running cables through the plastic drainpipes. It can however be impossible or very difficult to run cables with plug couplers (plug ends) through such drainpipes as they may be too large or a very tight fit. Also, as the drainpipes are not normally secured in place, the drainpipes do not restrict movement of the cables once laid. This method also requires that the cables are run through the ends of the drainpipes.

It is therefore desirable to provide a cable management system capable of being rapidly installed, at a low cost and requiring little or no on-site adaptation during deployment.

In an embodiment of a first aspect of the present invention there is provided a cable management assembly for use with a railway rail, the cable management assembly comprising: a connector comprising a clip and a fastener for fastening the clip to an underside of a foot of the railway rail, and a tube comprising, along the length of the tube, a slit for insertion of a cable into the tube, wherein the clip comprises an opening through which the tube is insertable into the clip, and the tube and clip are configured to be moveable relative to each other between an open position, in which the slit and opening are aligned to allow the cable to be inserted into the tube, and a closed position, in which the slit and opening are out of alignment so that the cable is retained in the tube.

The cable management assembly according to the present embodiment may either be fitted to a single rail, such that a cable runs from outside the rail into the gap between that rail and an adjacent rail, or vice versa, or can be fitted to two adjacent rails, so that the cable runs from the outer side of one of the rails, through the gap between the rails, to the outer side of the other rail. The fastener may preferably be designed for rapid deployment, such as providing a "snap-fit" attachment to an underside of the foot of the railway. The slit along the length of the tube may preferably be large enough that at least a single cable can be inserted into the tube easily. The size of the tube and clip may be adapted to accommodate as many cables as is necessary for the given task.

During installation the fastener is fastened to the underside of the foot of the railway rail and the tube is inserted into the clip with the slit of the tube and the opening of the clip being aligned in the open position allowing for insertion of cables into the tube. Once inserted, the tube is then moved or rotated relative to the clip until the slit and opening are no longer aligned, such that there is no gap through which the cables can be removed from the tube. In this way the cables are then retained within the tube. A cable management assembly according to the embodiment provides for rapid installation requiring little or no change to the configuration of the assembly and having no moving parts other than the relative rotation of the tube to the clip, which rotation can be performed by the installer from either side of the railway rail (either end of the tube).

Optionally, the cable management assembly further comprises one or more removable cable retainers each for covering the slit at a point along the length of the tube to retain the cable in the tube. In particular, in the event that movement of the tube is impossible or restricted once the cable management assembly is installed, a removable cable retainer can be fitted in place either over the slit or around the tube to allow the cables to be retained in the tube. Optionally, more than one removable cable retainer may be used. For example such a retainer may be attached at either end of the tube.

Alternatively, for example in situations in which it is not desirable or possible to move the tube relative to any other part of the cable management assembly at any time, a removable cable retainer may be provided to retain the one or more cables within the tube.

In this regard, in an embodiment of a second aspect of the invention there is provided a cable management assembly for use with a railway rail, the cable management assembly comprising: a connector comprising a receptacle and a fastener for fastening the receptacle to an underside of a foot of the railway rail, a tube comprising, along the length of the tube, a slit for insertion of a cable into the tube, and one or more removable cable retainers each for covering part of the slit at a point along the length of the tube to retain the cable in the tube, wherein the receptacle comprises an opening through which the tube is insertable into the receptacle.

Optionally, a cable management assembly embodying the first or second aspect of the present invention is made of a non-conductive material. It is desirable that the cable management assembly is non-conductive so that the cables are electrically isolated from the railway rail. Examples of suitable non-conductive materials include nylon 66, which may be used for the clip, and GRP (glass reinforced plastics) pultrusion for the tube. Materials of the respective parts of the cable management assembly may include other non-conductive materials, preferably with a high durability, such that once installed they require little or no maintenance for long periods of time and do not succumb to weather damage, whilst ensuring the railway rails remain electrically isolated.

Optionally, the slit extends along the entire length of the tube, since it is particularly easy to install cables into the tube if the cables can be inserted along the entire length of the tube. Once installed the cables enter and exit the tube through the ends of the tube rather than through the slit.

Optionally, the connector includes a second clip, comprising a second opening through which the tube is insertable into the second clip, the second clip being configured to be fastened to the underside of the foot of the railway rail by the fastener.

For arrangements in which movement of the tube is undesirable it is possible to provide a plurality of clips, wherein each clip provides further hold on the tube to reduce or inhibit movement.

The positioning of the tube as part of the cable management assembly can be improved and movement reduced through inclusion of the second clip to hold the tube in place. This is particularly advantageous if rotational motion is undesirable as a second clip would provide greater resistance to forces encouraging such motion. In a preferred embodiment the clip or clips may be used to position the removable cable retainer. For example in the case of two clips the removable cable retainer may preferably be positioned between the two clips.

In an embodiment a plurality of cable management assemblies forms a system for passing cables under a plurality of railway rails. The system comprises a plurality of cable management assemblies as described above, wherein each cable management assembly is attached to one railway rail of the plurality of railway rails.

Optionally, the tubes of the cable management assemblies may comprise a single tube which extends through the clips or receptacles of all of the cable management assemblies in the system.

Other advantages associated with embodiments of the present invention include rapid and low cost installation, low cost of the cable management assembly, no need for tools to install the assembly, no need to thread a cable through the tube in advance of installation, and ease of adding further cables after installation.

The invention will hereinafter be described, by way of example only, with reference to the attached drawings, in which:
- Figure 1 shows a perspective view from underneath a railway rail of a cable management assembly embodying the first aspect of the present invention in an unlocked position;
- Figure 2 shows a perspective view of the cable management assembly of Figure 1 in the locked position;
- Figures 3a and 3b show perspective views from underneath a railway rail of another cable management assembly embodying the first aspect of the present invention in the unlocked and locked positions, respectively;
- Figures 4a and 4b show side views of the cable management assembly of Figure 2 in the unlocked and locked positions, respectively;
- Figures 5a and 5b show perspective views from underneath a railway rail of the cable management assembly embodying the first aspect of the present invention in the unlocked and locked positions, respectively, as attached to the railway rail and adjacent to a sleeper;
- Figures 6a and 6b show perspective views from underneath a railway rail of a cable management system comprising two of the cable management assemblies each embodying the first aspect of the present invention in the unlocked and locked positions, respectively attached to the railway rail and adjacent to a sleeper; and
- Figure 7 shows a perspective view from underneath a railway rail of a cable management assembly embodying the second aspect of the present invention.

Embodiments of the invention provide a cable management assembly for the purpose of managing cables which are to be run from one side of one or more railway rails (rails) to the other side. More specifically, the embodiments relate to a way of passing cables under one or more railway rails safely.

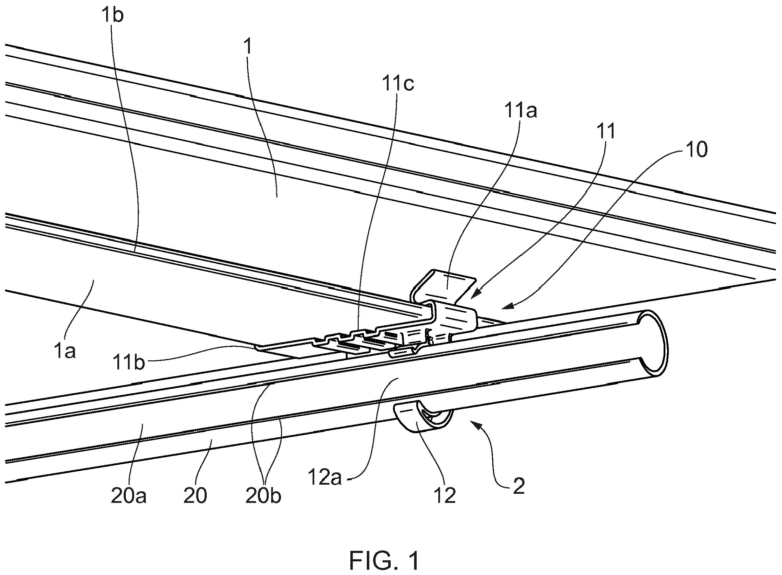

Figure 1 shows a cable management assembly 2 according to an exemplary embodiment of the first aspect of the present invention. As shown in Figure 1, the cable management assembly 2 includes a connector 10. The connector 10 includes a fastener 11, which fastener 11 is configured to fasten around an underside 1a of a foot 1b of a railway rail 1. In Figure 1, the rail 1 extends from the top left of the figure with the foot 1b passing through the fastener 11 of the cable management assembly 2, and the rail 1 is then obscured behind the cable management assembly 2 on the right of the Figure.

The cable management assembly 2 further includes a tube 20. The connector 10 further includes a clip 12. The clip 12 is configured to clip around the tube 20. The fastener 11 includes a first side portion 11a and a second side portion 11b, which side portions extend around either side of the foot 1b of the railway rail 1, so as to fasten the clip 12 (and/or the connector 10 as a whole) to the rail 1. The side portions 11a, 11b may attach around the foot 1b of the rail 1 in a snap-fit manner. This type of fastening helps to inhibit relative movement between the connector 10 and the rail 1. The first and second side portions 11a, 11b of the fastener 11 are connected by a connecting portion 11c. When fitted to a rail 1, the connecting portion 11c of the fastener 11 extends adjacent to, and in parallel with, the underside 1a of the rail 1. To provide additional structural support, the connecting portion 11c may be corrugated or be otherwise reinforced.

The clip 12 is provided on a side of the connector 10 opposite the fastener 11, as shown in Figure 1. The clip 12 may be positioned at any point along the connecting portion 11c of the fastener 11. Figure 1 shows an exemplary embodiment in which the clip 12 is attached to the connecting portion 11c of the fastener 11 at a position close to the first side portion 11a. The embodiment is however not limited to this position.

The clip 12 is configured to extend away from the fastener 11 to hold the tube 20 in a position such that the tube 20 passes below the railway rail 1. The tube 20 is an open tube (i.e. it is open at both ends) and includes a slit 20a which extends along the tube in the axial direction of the tube. The slit 20a may, as shown, extend along the full length of the tube 20. The slit 20a is configured to allow one or more cables to be inserted into, or removed from, the tube 20. The tube 20 may optionally be a rigid tube meaning that the slit 20a remains open without any additional force being applied to the tube 20. Alternatively, the tube may be a flexible tube wherein the slit 20a remains substantially closed until an opening force is applied to the tube 20 to open the slit 20a for insertion or removal of a cable. In this alternative, the clip 12 may preferably be a flexible clip configured to move with the flexible tube 20 so as to maintain a firm hold on the tube 20 when the slit 20a is open or closed.

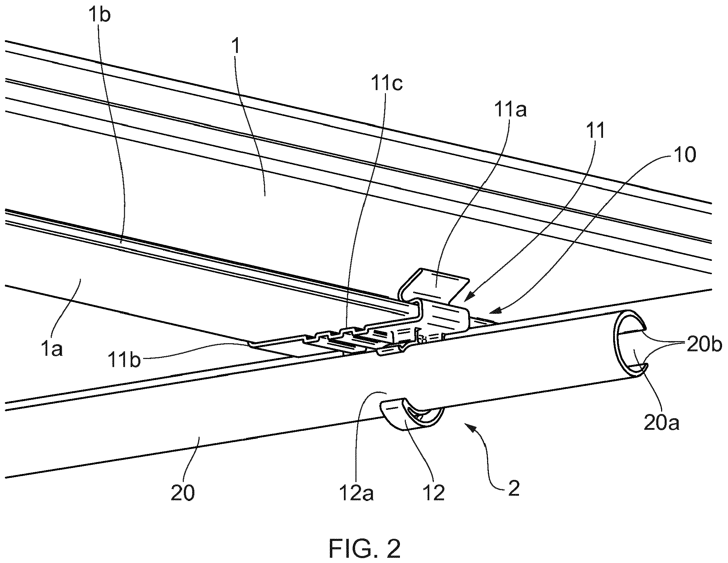

In this arrangement, the fastener 11 is attached to the underside 1a of the railway rail 1 and the tube 20 is inserted into the clip 12. The slit 20a in the tube 20 is, in one configuration, arranged to be aligned with an opening 12a in the clip 12. This arrangement is shown in Figure 1. The alignment of the slit 20a and the opening 12a allows one or more cables to be inserted into the tube 20 or removed from the tube 20. In order to retain the cables within the tube 20, the tube 20 may be rotated relative to the clip 12 so that the slit 20a is no longer aligned with the opening 12a. This arrangement is shown in Figure 2. The arrangement shown in Figure 1 may be described as an unlocked or open position. The arrangement shown in Figure 2 may be described as a locked or closed position. In the open position the slit 20a and the opening 12a need only be sufficiently aligned to allow one or more cables to be inserted into or removed from the tube 20. However, it will be apparent that the greater the alignment of the slit 20a and opening 12a the easier it is to insert or remove the one or more cables. Optionally, the tube 20 may include a ridge or lip 20b which extends slightly outwards from the edges of the tube 20 either side of the slit 20a, to aid positioning and alignment of the slit 20a with the opening 12a.

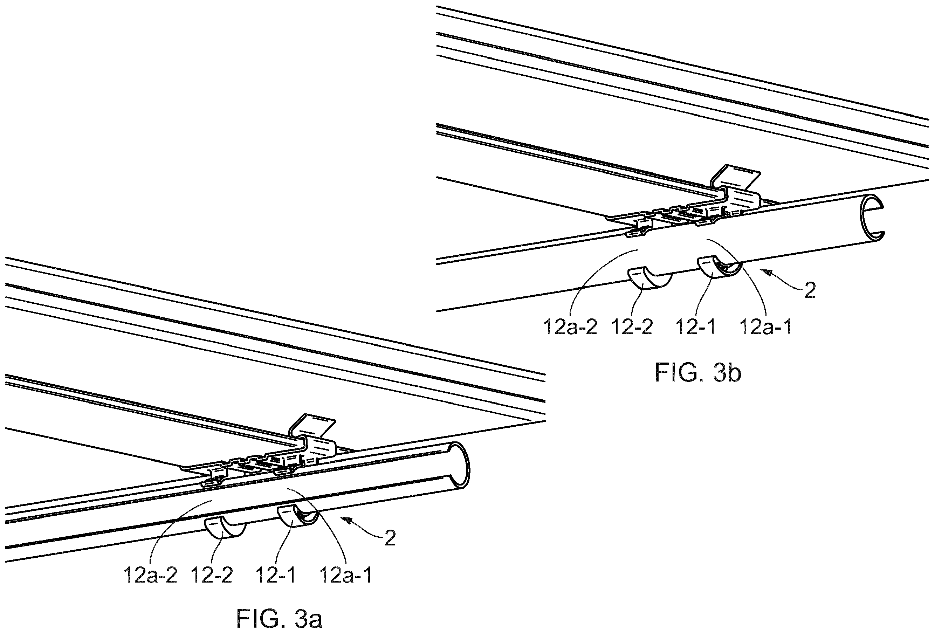

In an alternative embodiment the connector 10 may include two or more clips 12. As shown in Figures 3a and 3b, in one arrangement the connector 10 includes two clips 12-1, 12-2. Reference sign "12" will be used when no particular clip is being referred to. Figure 3a shows this arrangement in the unlocked position, in which the slit 20a is aligned with the openings 12a-1, 12a-2 of both clips 12-1, 12-2. Both clips 12-1, 12-2 have approximately the same configuration and may be positioned next to and in parallel with each other such that the tube 20 when positioned in the unlocked position provides the slit 20a to be aligned with both openings 12a-1, 12a-2. This arrangement is shown in Figure 3a. In the embodiment shown in Figures 3a and 3b, the clips 12-1, 12-2 are positioned near opposing ends (near the first side portion 11a and the second side portion 11b, respectively) to provide greater resistance to movement of the tube 20 thus ensuring that the positioning of the cables, once installed, remains unchanged.

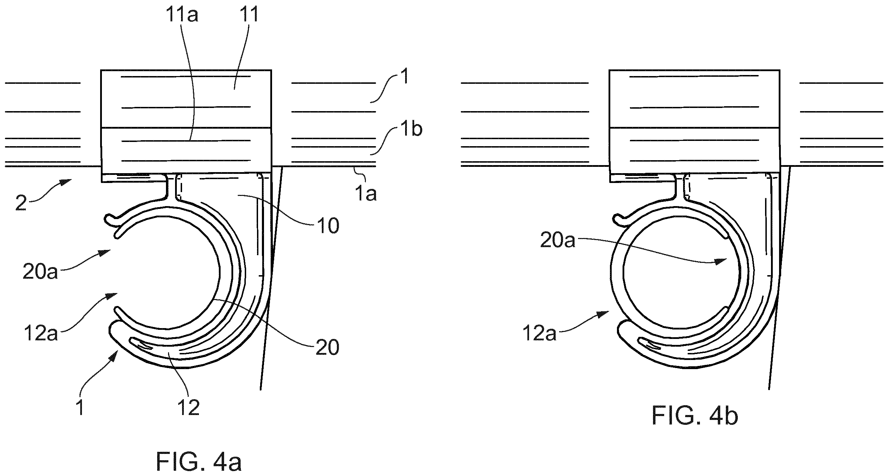

Figures 4a and 4b show side-on views of an embodiment of the invention in the unlocked position, with the slit 20a and opening 12a aligned, and in the locked position, with the slit 20a and opening 12a not in alignment, respectively.

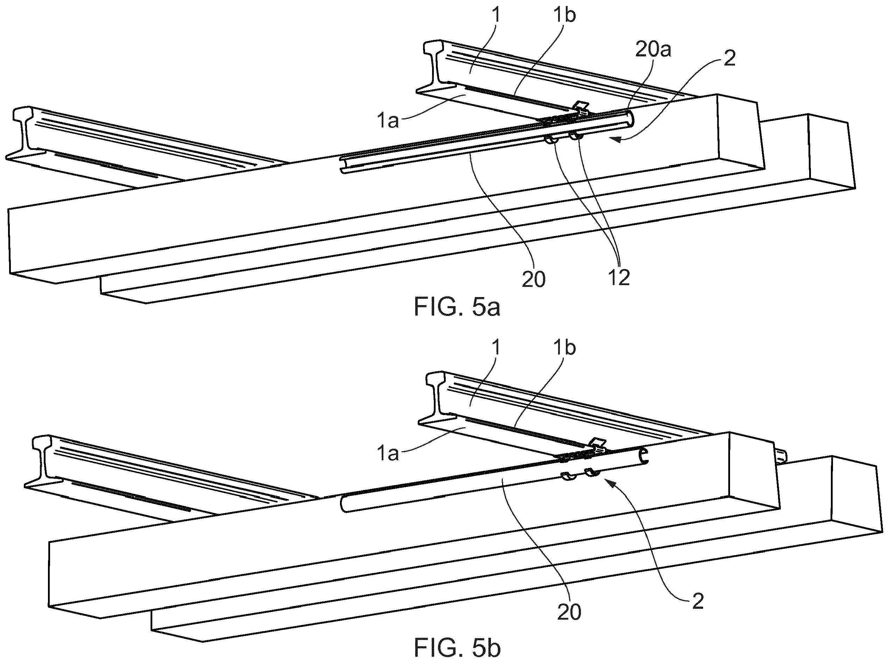

Figures 5a and 5b show unlocked and locked arrangements of an embodiment of the invention, respectively. In this embodiment the cable management assembly 2 is attached to one of two parallel railway rails 1 and the tube 20 extends from an outer side of one of the rails, under that rail 1 to the gap between the two rails 1.

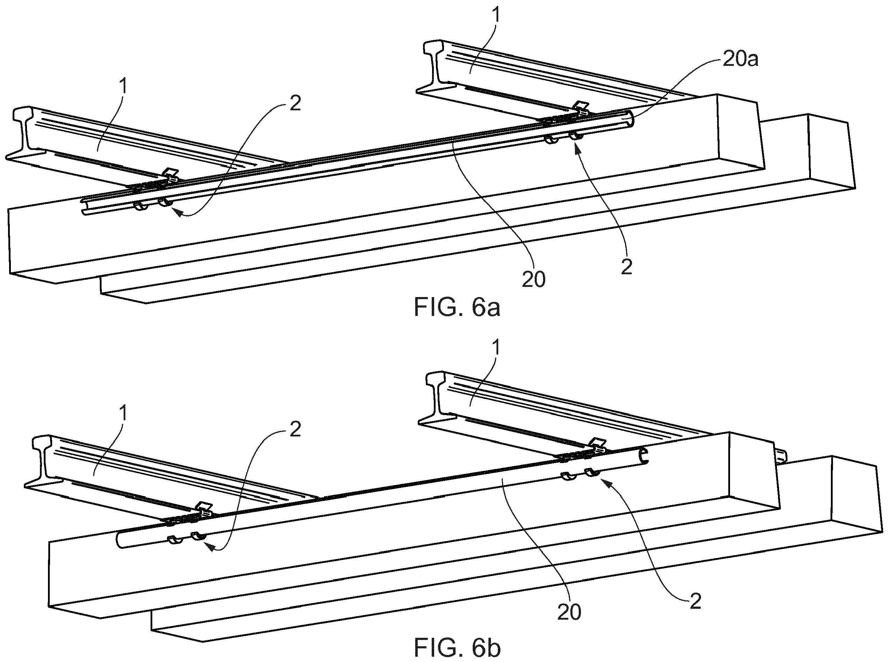

Figures 6a and 6b show an alternative embodiment in which two cable management assemblies 2 are attached to respective parallel rails 1. As shown, the tubes 20 of the cable management assemblies 2 comprise a single tube, which extends between the cable management assemblies 2 and through the clips 12 of both cable management assemblies 2. Alternatively, in this arrangement each cable management assembly 2 may include a separate tube 20. However, providing a single tube 20 extending between the two cable management assemblies 2 has the benefit that in both cable management assemblies 2 the slit 20a and opening 12a will be aligned simultaneously.

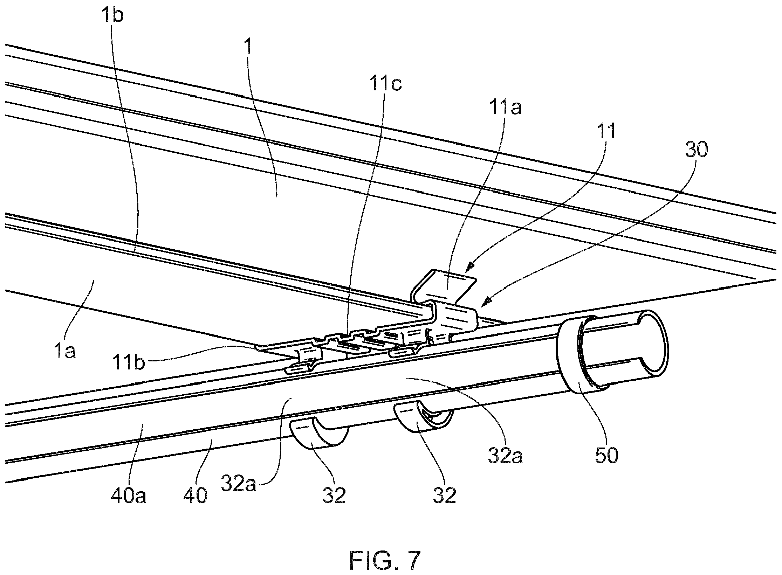

In a further alternative embodiment a cable management assembly 2 includes a removable cable retainer 50, as shown in Figure 7. In this embodiment a connector 30 includes a receptacle 32, with the receptacle 32 containing an opening 32a. A tube 40 is received into the receptacle 32 through the opening 32a. The fastener 11 and railway rail 1 of this embodiment corresponds to those of the earlier embodiments. In this embodiment the receptacle 32 receives the tube 40 and holds the tube 40 in a position corresponding to the open position of the earlier embodiments. This embodiment differs from the earlier embodiments as there is no need for relative movement or rotation between the receptacle 32 and tube 40 to move to a closed position. In this embodiment cables are retained in the tube 40 by means of the removable cable retainer 50, which may be positioned at any point on the length of the tube 40. Further, this embodiment is not limited to a single removable cable retainer 50 and multiple removable cable retainers 50 may be used to improve the resistance to cables accidentally being pulled out of the tube 40. Further, Figure 7 includes two receptacles 32. However, this embodiment is not limited to two receptacles 32. A single receptacle 32 or more than two are also envisaged.

In the embodiments described above the cable management assembly 2 may be positioned to attach to the underside 1a of a foot of the railway rail 1 adjacent to a railway sleeper, supporting the railway rail 1, such that the tube 20, 40 extends in parallel with the sleeper. Positioning the cable management assembly 2 adjacent to a sleeper provides the benefit that the cables extending to the tube 20, 40 will have extra protection from damage.

In the arrangement shown in Figure 7, the removable cable retainer 50 may for example be a C-shaped clip retainer which may be fitted either around the tube 40 or simply over the slit 40a. The removable cable retainer 50 may be of any configuration suitable for covering the slit 40a in the tube 40. The removable cable retainer 50 may alternatively be a tie (such as a cable tie).

The cable management assembly 2 is preferably made of non-conductive materials, preferably with a high durability. For example nylon 66 may be used for the clip 12 or receptacle 32 and a GRP (glass reinforced plastics) pultrusion may be used for the tube 20, 40.

Optionally, in any of the arrangements or embodiments described above, the connecting portion 11c of the fastener 11 is adjustable to adjust the distance between the side portions 11a, 11b. In a particular arrangement the connecting portion 11c provides a ratcheting connection between the side portions 11a, 11b so that the fastener may be adjusted to any railway rail foot 1b size.

## Claims

1. A cable management assembly for use with a railway rail, the cable management assembly comprising:
a connector comprising a clip and a fastener for fastening the clip to an underside of a foot of the railway rail, and
a tube comprising, along the length of the tube, a slit for insertion of a cable into the tube, wherein
the clip comprises an opening through which the tube is insertable into the clip, and
the tube and clip are configured to be moveable relative to each other between an open position, in which the slit and opening are aligned to allow the cable to be inserted into the tube, and a closed position, in which the slit and opening are out of alignment so that the cable is retained in the tube.

2. The cable management assembly according to claim 1, further comprising one or more removable cable retainers each for covering the slit at a point along the length of the tube to retain the cable in the tube.

3. The cable management assembly according to any preceding claim, wherein the connector includes a second clip, comprising a second opening through which the tube is insertable into the second clip, the second clip being configured to be fastened to the underside of the foot of the railway rail by the fastener.

4. A cable management assembly for use with a railway rail, the cable management assembly comprising:
a connector comprising a receptacle and a fastener for fastening the receptacle to an underside of a foot of the railway rail,
a tube comprising, along the length of the tube, a slit for insertion of a cable into the tube, and
one or more removable cable retainers each for covering the slit at a point along the length of the tube to retain the cable in the tube, wherein
the receptacle comprises an opening through which the tube is insertable into the receptacle.

5. The cable management assembly according to claim 4, wherein the connector includes a second receptacle, comprising a second opening through which the tube is insertable into the second receptacle.

6. The cable management assembly according to any preceding claim, wherein the cable management assembly is made of a non-conductive material.

7. The cable management assembly according to any preceding claim, wherein the slit extends along the entire length of the tube.

8. A system for passing cables under a plurality of railway rails, the system comprising a plurality of cable management assemblies according to any preceding claim, wherein each cable management assembly is attached to one railway rail of the plurality of railway rails.

9. The system according to claim 8, wherein the tubes of the cable management assemblies are a single tube.
